# EUROPEAN PATENT APPLICATION

(11) **EP 2 295 726 A1**
(43) Date of publication of application: **16.03.2011**
(21) Application number: 10157175.0
(22) Date of filing: 22.03.2010
(51) Int. Cl.: F01D 9/06, F01D 15/10, F02C 7/275, F02C 7/32, F04D 25/06

(54) **Gas turbine engine compressor with integrated starter/generator**

(30) Priority: 27.07.2009 US 509887
(71) Applicant: Rolls-Royce Corporation, Indianapolis, IN 46241 (US)
(72) Inventor: Burkholder, Philip, Pittsboro, IN 46167 (US); Rodriquez, Rigoberto J., Avon, IN 46123 (US); Gagne, Steven, Avon, IN 46123 (US); Pesyna, Kenneth M., Carmel, IN 46033 (US)
(74) Representative: Office Freylinger

(57) **Abstract**

A turbine engine compressor has a rotor including rotating compressor discs. Magnets are positioned on the rotating compressor discs. Electrical coils are positioned in a stationary guide vane internal ring so as to create an electric machine providing starting torque to a rotor, and/or generating electrical energy once the rotor is rotating.

## Description

### FIELD OF THE INVENTION

The present invention relates generally to a compressor of a turbine engine, and more particularly to a starter/generator integrated into a compressor of a gas turbine engine.

### BACKGROUND OF THE INVENTION

Most integrated electric machines are built around the same design. A typical rotor assembly is secured to the turbine engine rotor and the stator supported by the bearing structure. These designs typically require additional space claim - resulting in a longer engine. The present invention employs existing structure in the compressor for additional functionality.

Prior systems employing the open rotor concept for power generation in the rotating reference include hub generator and shaft generator designs. A hub generator is an axial flux machine using contra-rotation of hubs to generate power. Non ideal diameter gives low utilization relative to the structure size. The design requires outer structure to act as containment. A shaft generator is a radial flux machine using high differential speed with respect to a sun gear to generate power. The design produces a hot environment that is likely to require an oil jacket and AOHE (air oil heat exchanger). There is also the risk of oil fire (machine or cable failures) which could split machines either side of the gearbox.

With the foregoing problems and concerns in mind, it is the general object of the present invention to provide a compressor section of a turbine engine which employs existing rotating machinery to generate needed electrical power as well as to start the turbine engine via a high pressure shaft.

### SUMMARY OF THE INVENTION

In an aspect of the present invention, a turbine engine compressor comprises a rotor including rotating compressor discs. Magnets are positioned on the rotating compressor discs. Electrical coils are positioned in a stationary guide vane internal ring so as to create an electric machine providing starting torque to a rotor, and/or generating electrical energy once the rotor is rotating.

### BRIEF DESCRIPTION OF THE DRAWINGS

FIG. 1 is a cross-sectional view of a gas turbine engine compressor including an axial flux starter/generator where the magnetic lines of flux are axial to the rotating component of the compressor in accordance with an embodiment of the present invention.

FIG. 2 is a cross-sectional view of a gas turbine engine compressor including a radial flux starter/generator where the magnetic lines of flux are radial to the rotating component of the compressor in accordance with another embodiment of the present invention.

### DETAILED DESCRIPTION OF THE PREFERRED EMBODIMENTS

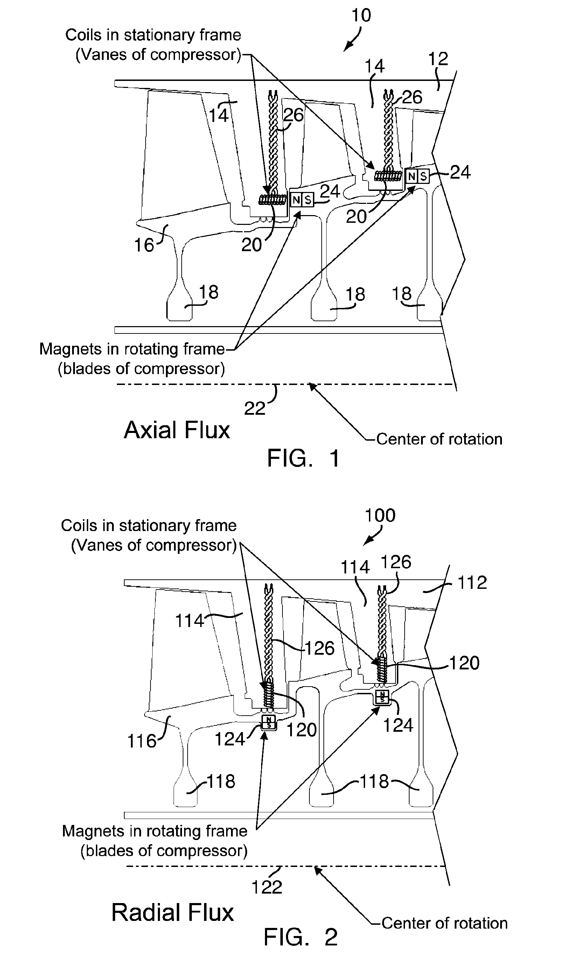

With reference to FIG. 1, a gas turbine engine compressor embodying the present invention is indicated generally by the reference number 10. The compressor 10 comprises a stationary frame 12 including a plurality of vanes 14, and a rotating frame 16 including a plurality of blades 18.

An electrical coil 20 is disposed in the stationary frame 12, and more particularly in at least one of the plurality of vanes 14. As shown in FIG. 1, the coil 20 is oriented such that a central longitudinal axis through the coil 20 extends in a direction generally axially or parallel to the axis of rotation 22 of the compressor 10 so as to form an axial flux device. A magnet 24 is disposed in the rotating frame 16, and more particularly in at least one of the blades 18 such that the magnet 24 is adjacent to the coil 20. Preferably, the magnet 24 is disposed under a compressor interstage spacer. As shown in FIG. 1, the magnet 24 is oriented and aligned with respect to the coil 20 such that the central longitudinal axis of the coil 20 extends through a north pole and a south pole of the magnet 24. As also shown in FIG. 1, the north pole side of the magnet 24 is closer to the coil 20, but can be oriented such that the south pole side is closer to the coil without departing from the scope of the present invention.

Electrical conductors 26 disposed within the stationary frame 12, and more particularly within the same vane as the coil 20 are coupled to each end of the coil. The electrical conductors 26 extend from the coil 20 in a direction radially outwardly from the axis of rotation 22 for easy electrical access.

With reference to FIG. 2, a gas turbine engine compressor in accordance with another embodiment of the present invention is indicated generally by the reference number 100. The compressor 100 comprises a stationary frame 112 including a plurality of vanes 114, and a rotating frame 116 including a plurality of blades 118.

An electrical coil 120 is disposed in the stationary frame 112, and more particularly in at least one of the plurality of vanes 114. As shown in FIG. 2, the coil 120 is oriented such that a central longitudinal axis through the coil 120 extends in a direction generally radially or perpendicularly to the axis of rotation 122 of the compressor 100 so as to form a radial flux device. A magnet 124 is disposed in the rotating frame 116, and more particularly in at least one of the blades 118 such that the magnet 124 is adjacent to the coil 120. Preferably, the magnet 124 is disposed under a compressor interstage spacer. As shown in FIG. 2, the magnet 124 is oriented and aligned with respect to the coil 120 such that the central longitudinal axis of the coil 120 extends through a north pole and a south pole of the magnet 124. As also shown in FIG. 2, the north pole side of the magnet 124 is closer to the coil 120, but can be oriented such that the south pole side is closer to the coil without departing from the scope of the present invention.

Electrical conductors 126 disposed within the stationary frame 112, and more particularly within the same vane as the coil 120 are coupled to each end of the coil. The electrical conductors 126 extend from the coil 120 in a direction radially outwardly from the axis of rotation 122 for easy electrical access.

The product in which use of the present invention can be implemented is any and all new compressor designs and upgrades to existing engines. The present invention employs the existing rotating and stationary components of a turbine engine compressor section to produce electrical power generation. It is applicable to any turbomachinery.

Magnets are positioned preferably on the rotating compressor discs with the electrical coils positioned preferably in the stationary guide vane internal ring to create an electric machine capable of providing starting torque to the rotor, and/or generating electrical energy once the rotor is rotating.

The present invention employs existing rotating machinery to generate needed electrical power as well as to start the turbine engine via the high pressure shaft. There is a reduced need for gearbox mounted components. The present invention integrates starting and generating capabilities directly into the turbine engine compressor section. By positioning the magnets under the compressor interstage spacer, the present invention removes the need for the magnets to be structural members and employs the natural high strength materials in the existing rotor in the most efficient manner. The inventive concept can be implemented as a distributed electric machine that is over several compressor stages. The integrated starter/generator inventive concept allows for a symmetrical and/or smaller nacelle leading to lower drag and leading to lower SFC. The inventive concept also provides customers with a turnkey solution for prime power generation/propulsion requirements.

As will be recognized by those of ordinary skill in the pertinent art, numerous modifications and substitutions can be made to the above-described embodiments of the present invention without departing from the scope of the invention. Accordingly, the preceding portion of this specification is to be taken in an illustrative, as opposed to a limiting sense.

## Claims

1. A turbine engine compressor comprising:
rotor including rotating compressor discs;
magnets positioned on the rotating compressor discs; and
electrical coils positioned in a stationary guide vane internal ring so as to create an electric machine providing starting torque to a rotor, and/or generating electrical energy once the rotor is rotating.

2. A turbine engine compressor as defined in claim 1, wherein the magnets are positioned under a compressor interstage spacer.

3. A turbine engine compressor as defined in claim 1, wherein the magnets are positioned on the rotating compressor discs such that magnetic lines of flux are radial to a rotating component of the rotor.

4. A turbine engine compressor as defined in claim 1, wherein the magnets are positioned on the rotating compressor discs such that magnetic lines of flux are axial to a rotating component of the rotor.
